# EUROPÄISCHE PATENTSCHRIFT

(11) **EP 2 188 828 B1**
(45) Veröffentlichungstag und Bekanntmachung des Hinweises auf die Patenterteilung: **26.01.2011**
(21) Anmeldenummer: 08787372.5
(22) Anmeldetag: 21.08.2008
(51) Int. Cl.: H01J 61/36, H01J 9/32

(54) **HOCHDRUCKENTLADUNGSLAMPE**
HIGH PRESSURE DISCHARGE LAMP
LAMPE À DÉCHARGE HAUTE PRESSION

(30) Priorität: 19.09.2007 DE 102007044629
(43) Veröffentlichungstag der Anmeldung: 26.05.2010
(73) Patentinhaber: Osram Gesellschaft mit beschränkter Haftung, 81543 München (DE)
(72) Erfinder: HÜTTINGER, Roland, 86916 Kaufering (DE); JÜNGST, Stefan, 85604 Zorneding (DE); KOTTER, Stefan, 94094 Rotthalmünster 2 (DE); PHAM GIA, Khanh, 85579 Neubiberg (DE); WALTER, Steffen, 85667 Oberpframmern (DE)
(86) Internationale Anmeldenummer: PCT/EP2008/060928
(87) Internationale Veröffentlichungsnummer: WO 2009/037063

(56) Entgegenhaltungen:
- GB-A- 961 070
- US-A- 3 974 410
- US-A- 5 861 714
- US-B1- 6 194 832
- US-B1- 6 320 314

## Beschreibung

### Technisches Gebiet

Die Erfindung betriff ein Verfahren zur Herstellung eines rohförmigen Cermetteils und eine Hochdruckentladungslampe.

### Stand der Technik

Aus der US-A 5 861 714 und der US-A 5 742 123 ist eine Hochdruckentladungslampe bekannt, bei der ein keramisches Entladungsgefäß an seinen Enden ein axial geschichtetes Cermetteil zur Abdichtung verwendet.

Bei US-A 5 742 123 wird ein Wolfram-Stab mit Schraubgewinde in ein Cermetteil eingesetzt, dessen einzelne Schichten in ihrer Dicke nach außen hin zunehmen. Ein Platinlot deckt einen Flansch auf dem Cermetteil ab. Die Anzahl der Schichten liegt bei etwa 10. Die erste Schicht ist direkt auf das Ende des Entladungsgefäßes aufgesetzt, die letzte Schicht ist mittels dem Platinlot mit Flansch und Wolfram-Stab hermetisch verbunden.

Bei US 5 861 714 wird die Abdichtung zwischen der letzten Schicht und der Durchführung durch Direktsinterung und ggf. Unterstützung mittels Glaslot hergestellt. Die Cermetteile sind in beiden Fällen aufwendig herzustellen. Die Lebensdauer ist wegen der geringen Anzahl von Abstufungen und wegen des Konzepts, die Abdichtung der Durchführung in der letzten Schicht vorzunehmen, unbefriedigend.

### Darstellung der Erfindung

Die Aufgabe der vorliegenden Erfindung ist es, ein Verfahren zur Herstellung eines rohrförmigen Cermetteils für eine Hochdruckentladungslampe mit keramischem Entladungsgefäß und eine Hochdruckenttadungslampe bereitzustellen, deren Abdichtung auf dem Konzept eines axialen Gradientencermets beruht und erstmals eine ausreichende Lebensdauer für die Anwendung in der Allgemeinbeleuchtung verspricht.

Diese Aufgabe wird gelöst durch die Merkmale der Ansprüche 1 und 5.

Besonders vorteilhafte Ausgestaltungen finden sich in den abhängigen Ansprüchen.

Die Verschlusstechnik in Hg-Hochdruckentladungslampen mit keramischem Entladungsgefäß, insbesondere mit aggressiver Metallhalogenid-Füllung, stellt aufgrund der unterschiedlichen thermischen Ausdehnungskoeffizienten der Einzelkomponenten noch immer ein nicht befriedigend gelöstes Problem dar.

Dabei kommt es vor allem im Bereich der elektrischen Anschlüsse zur Bildung von Rissen, da die unterschiedlichen thermischen Ausdehnungskoeffizienten während des Erwärmens und wieder Abkühlens bei den Einschalt- und Ausschaltvorgängen zu weit auseinanderliegen. Das für das Entladungsgefäß verwendete Al₂O₃ hat einen typischen thermischen Ausdehnungskoeffizienten von 8,3 x 10⁻⁶ K⁻¹, übliche Cermetteile weisen einen thermischen Ausdehnungskoeffizienten von 6 bis 7 x 10⁻⁶ K⁻¹ auf. Ein Molybdänstift besitzt etwa einen thermischen Ausdehnungskoeffizienten von 5 x 10⁻⁶ K⁻¹.

Erfindungsgemäß ist das Abdichtungssystem jetzt so aufgebaut, dass ein keramisches Entladungsgefäß mit Kapillarenden verwendet wird. Daran schließt sich ein rohrartiges Cermetteil mit axialem Gradienten an, der etwa gleichen Innendurchmesser und Außendurchmesser wie die Kapillare besitzt. Die Anbindung des Cermetrohrs an das Ende der Kapillare erfolgt über ein Hochtemperaturlot, das etwa bei 1500 bis 1800 °C schmilzt und dabei eine feste Grenzflächenverbindung ermöglicht. Alternativ erfolgt die Anbindung durch Versintern mittels eines feinkörnigen sinteraktiven Al₂O₃-Pulvers. Auf dem Cermetrohr sitzt eine Abdeckkappe aus Molybdän mit zentraler Bohrung. Die Kappe kann insbesondere mit einem zentralen axial nach außen stehenden Kragen versehen sein.

Als Durchführungsteil wird zumindest am äußeren Ende ein Stift aus Molybdän verwendet. Er hat typisch einen Durchmesser im Bereich 0,6 bis 1,2 mm. Für den Verschluss wird der Stift aus Molybdän mit der Abdeckkappe verschweißt. Die Anbindung der Abdeckkappe an das Cermetrohr erfolgt über eine Verlötung mittels metallbasiertem Lot. Bevorzugt wird ein Platinlot verwendet. Alternativ kann auch eine sinteraktive Verbindung gewählt werden.

Das Problem der sprunghaft sich ändernden thermischen Ausdehnungskoeffizienten von PCA (Gefäß oder auch Kapillare), Cermetrohr und Abdeckkappe wird durch Verwendung eines Cermetrohrs gelöst, das eine Vielzahl von Schichten verwendet. Statt bisher maximal etwa 10 Schichten können erstmals deutlich mehr, beispielsweise 50 dünne Schichten verwendet, typisch 100 bis zu 200 Schichten. Möglich wird dies durch eine Multilagentechnologie für die Herstellung dünner Folien von 20 bis 100 µm Tapestärke.

Das Cermetrohr besteht aus Mo-Al₂O₃-Schichten unterschiedlicher Zusammensetzung.

Auf die Stirnfläche des Endes des keramischen Entladungsgefäßes bzw. des Kapillarenendes wird eine erste Schicht des Cermetrohrs aufgesetzt, die reich an Al₂O₃ und arm an Mo ist. Typisch ist ein Volumenverhältnis von 90/10 bis 98/2 zwischen Al₂O₃ und Mo. Es kann aber auch reines Al₂O₃ in der ersten Schicht verwendet werden.

Das Cermetrohr wird graduiert, bei bevorzugt konstanter Dicke der einzelnen Schichten, aufgebaut, wobei der Anteil des Mo in den einzelnen Schichten nach außen hin immer weiter zunimmt. An der Mo-reichen letzten Schicht mit typisch 95 Vol.-% Mo-Anteil wird schließlich die Abdeckkappe angelötet. Diese letzte Schicht ist, wie auch die erste Schicht, bevorzugt dicker als die Zwischenschichten ausgeführt um die mechanische Haltbarkeit zu verbessern.

Die Herstellung des gradierten Cermetrohrs erfolgt über eine Multilagen-Technologie. Dafür werden dünne Folien mit unterschiedlichem Mo/Al₂O₃-Verhältnis hergestellt. Deren Anteil an Mo bewegt sich typisch zwischen 5 und 95 Vol.-%. Die Folien werden anschließend entsprechend ihrem zunehmenden Mo-Gehalt gestapelt und laminiert. Aus den laminierten zu Platten verbundenen Folien werden anschließend Hohlzylinder Rohre herausgestanzt, die folglich entlang ihrer Längsachse einen laminierten Aufbau besitzen. Nach dem Sintern der Hohlzylinder werden die daraus gebildeten gradierten Rohre mittels Hochtemperaturlot oder aktivem Sinterpulver auf die Enden der Kapillaren aufgebracht und an ihrem anderen Ende, das Folien mit hohem Mo-Anteil aufweist, mit der Abdeckkappe verlötet. Ein derartiger Aufbau gewährleistet nicht nur einen quasikontinuierlichen Verlauf des thermischen Ausdehnungskoeffizienten vom Al₂O₃ der Kapillare bis hin zum Molybdän der Abdeckkappe und der Durchführung, sondern auch eine sichere Abdichtung der beiden Endflächen des Cermets. Bisher hat man eine derartig feine Abstufung weder für notwendig befunden, geschweige denn einen geeigneten Herstellungsweg dafür angeben können, noch eine sichere Anbindung des Cermetrohrs an die andern Teile gefunden.

Bevorzugt haben die einzelnen Folien, außer den beiden Deckfolien an erster und letzter Stelle, gleiche Dicke, was die Herstellung vereinfacht. Außerdem ist es vorteilhaft, wenn der Anteil des Mo am Cermet von Folie zu Folie sich zwischen erster und letzter Folie möglichst gleichmäßig verändert, um die Bildung von Sprüngen oder Rissen zu vermeiden. Der Anteil des Mo an der ersten bzw. letzten Folie sollte etwa 5 bzw. 95 Vol.-% betragen, weil dann der thermische Ausdehnungskoeffizient dieser Mischungen sehr nahe am angrenzenden Material Mo bzw. Al₂O₃ liegt.

Die Herstellung des Cermetrohrs über eine Multilagentechnologie hat den Vorteil, dass die Zusammensetzung des Schlickers zur Herstellung der einzelnen Folien in einem beliebig gewünschten Mo/Al₂O₃-Verhältnis erfolgen kann. So sind feinste Abstufungen im thermischen Ausdehnungskoeffizienten möglich, die einen großen Beitrag zur verbesserten Abdichtung leisten. Außerdem wird damit eine Dicke der einzelnen Folien (Tapes) von lediglich 20 bis 100 µm möglich. Eine größere Dicke der einzelnen Folie würde bei gegebener Abstufung und Gesamtzahl an einzelnen Folien zu einer zu großen Dicke des gradierten Rohrs führen. Die Dicke der einzelnen Folien bestimmt letztlich den Grad der Abstufung des thermischen Ausdehnungskoeffizienten im Cermetrohr.

Ein besonderer Vorteil des Gesamtkonzpts ist, dass die Herstellung der Einzelkomponenten für die Verschlusstechnik getrennt erfolgen kann. Der gesamte Verschluss ist modular aufgebaut.

Durch einen Sinterprozess bei 1600 bis 2000 °C, unter Schutzgas wie N2, Argon, Formiergas oder H2, werden die einzelnen Folien des Cermetrohrs gasdicht miteinander verbunden, wobei eine innige Verbindung zwischen den einzelnen Schichten unterschiedlicher Zusammensetzung erzeugt wird. Dadurch werden Risse infolge thermomechanischer Spannungen minimiert und nahezu vermieden.

In einer speziellen Ausführungsform ist die Stirnfläche der Kapillare abgeschrägt. Dies dient der besseren Zentrierung und der Verzögerung der Delamination zwischen der ersten Cermetschicht und dem PCA des Entladungsgefäßes während der Lebensdauer. Abgeschrägte Kanten sind in aller Regel in der Keramikfügetechnik spannungsärmer als gerade Flächen.

Dazu passend ist auch die der Kapillare zugewandte Stirnfläche des Cermetrohrs abgeschrägt. Die erste Folie ist zu diesem Zweck ursprünglich besonders dick ausgeführt, typisch bis zu 300 µm, und die Abschrägung ist in diese erste Zone des Cermetrohrs eingepresst. Diese Abschrägung kann aus ungesinterten, gradierten Rohren durch mechanische Bearbeitung hergestellt werden.

Das keramische Entladungsgefäß ist bevorzugt aus Al₂O₃, beispielsweise PCA. Es können die üblichen Dotierungen wie MgO verwendet werden. PCA kann auch schon als Endschicht integraler Bestandteil des Rohrs sein.

Als Glaslot können Hochtemperatur-Glaslote wie beispielsweise eine Mischung aus Al2O3 und Seltenerd-Oxid, insbesondere Dy203, verwendet werden, siehe beispielsweise EP-A 587 238 für eine nähere Erläuterung. Diese Mischungen sind thermisch belastbarer als die üblichen Lote, brauchen aber für eine gute Verbindung längere Zeit als üblicherweise bei dem Einschmelzprozess zur Verfügung steht. Bevorzugt werden Hochtemperatur-Glaslote aus einer Mischung aus A1203 und Dy203 verwendet, wobei der Anteil A1203 95 bis 80 Vol.-% beträgt, Rest Dy203. Typische Sintertemperaturen sind 1750 bis 1950 °C.

Für die Lotverbindung zwischen der PCA-Kapillare und dem gradierten Cermet werden Mischungen aus den Rohstoffen A1203 und Dy2O3 hergestellt und anschließend bei Temperaturen zwischen 1600 und 1900 °C in eutektische Schmelzen überführt. Die erstarrten Schmelzen werden nach dem Sintern zu feinen Pulvern, auch Fritten genannt, mit Korngrößen d50 zwischen 1 und 5 µm gemahlen. Daraus werden Pasten hergestellt, die für Dispenser geeignet sind. Für die Fügung von PCA-Material und gradiertem Cermet wird an der Stirnfläche der PCA-Kapillare eine dünne Schicht der Paste aufgetragen und anschließend in die noch feuchte Paste das gradierte Cermet mit der Al203-reichen Seite aufgesetzt und positioniert. Die Trocknung der Paste erfolgt bei Temperaturen zwischen 60 und 80 °C. die Anbindung zwischen Kapillare und Cermet erfolgt im Sinterofen bei Temperaturen zwischen 1500 und 1900 °C mit einer Haltezeit von mindestens 5 Minuten unter Ausschluss von Sauerstoff. Als Sinteratmosphäre wird Vakuum, oder N2 oder Ar oder H2 oder Formiergas (N2/H2) verwendet. Die besondere Eigenschaft dieses Lotes ist, dass die Haltetemperatur zur Fügung deutlich über der Schmelztemperatur des AlDy-Lotes liegt. Das ergibt folgende Vorteile:

Durch die Haltetemperatur, die höher als die Löttemperatur ist, besitzt dieses Lot eine niedrigere Viskosität als übliche Lote. Das Lot kann daher aufgrund von Kapillarkräften in feinste Poren eindringen und diese erfolgreich dauerhaft verschließen.

Die verlängerte Haltezeit bei Temperaturen, die höher als die Lottemperatur sind, führt zur Kristallisation des Lots, wobei vorwiegend A1203 auskristallisiert. Die Kristallisation des A1203 entsteht durch Verarmung an Dy203 in der Schmelze. Denn dieses Dy203 kann durch seine höhere Mobilität an den Korngrenzen des A1203, sowohl der PCA-Kapillare als auch des Cermets, wegdiffundieren. Das führt dazu, dass die Fügung nach der Temperaturbehandlung aus kristallinem Al2O3 mit geringen Anteilen an Dy203 an den Korngrenzen. Es entsteht somit ein kontinuierlicher AL2O3-Übergang von Al2O3-Cermet, AlO3 aus dem Lot und AL203 aus der Kapillare. Aufgrund der breiten Möglichkeiten an relativen Anteilen Al2O3 zu Dy203 ist auch die Lottemperatur in einem breiten Spektrum an Temperaturen einstellbar. Außerdem kann jetzt die Herstellung der Einzelkomponenten für die Verschlusstechnik getrennt erfolgen.

### Kurze Beschreibung der Zeichnungen

Im Folgenden soll die Erfindung anhand von Ausführungsbeispielen näher erläutert werden. Die Figuren zeigen:
- Fig. 1: eine Reflektorlampe mit keramischem Entladungsge- fäß;
- Fig. 2: ein keramisches Entladungsgefäß, in Explosionsdar- stellung, teilweise geschnitten;
- Fig. 3: einen Querschnitt durch das Entladungsgefäß.

### Bevorzugte Ausführung der Erfindung

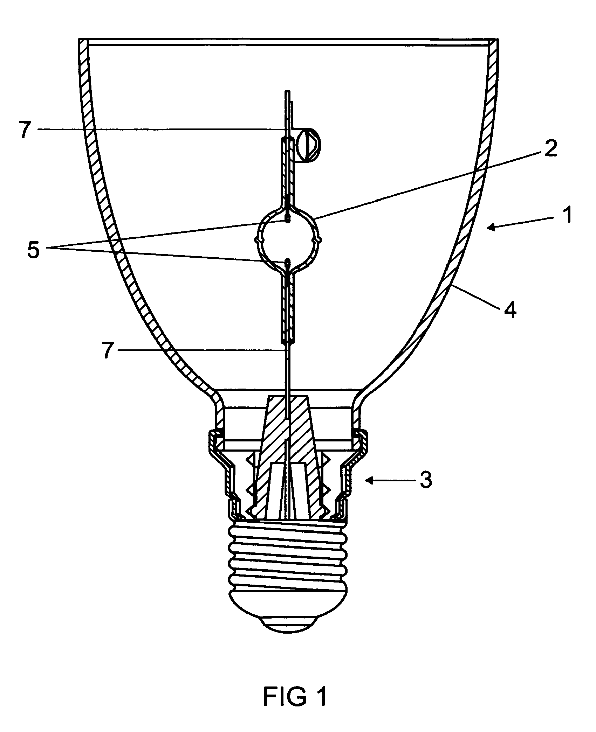

In Figur 1 ist schematisch eine Reflektorlampe 1 gezeigt. Sie besitzt ein keramisches Entladungsgefäß 2, das in einem Sockel 3 befestigt ist und zwei Elektroden 5 im Entladungsvolumen aufweist. Aus dem Entladungsgefäß ragen Durchführungen 7. Am Sockel ist ein Reflektor 4 befestigt, in dem das Entladungsgefäß axial angeordnet ist. das Entladungsvolumen beinhaltet eine Füllung, typischerweise mit Metallhalogeniden und Quecksilber.

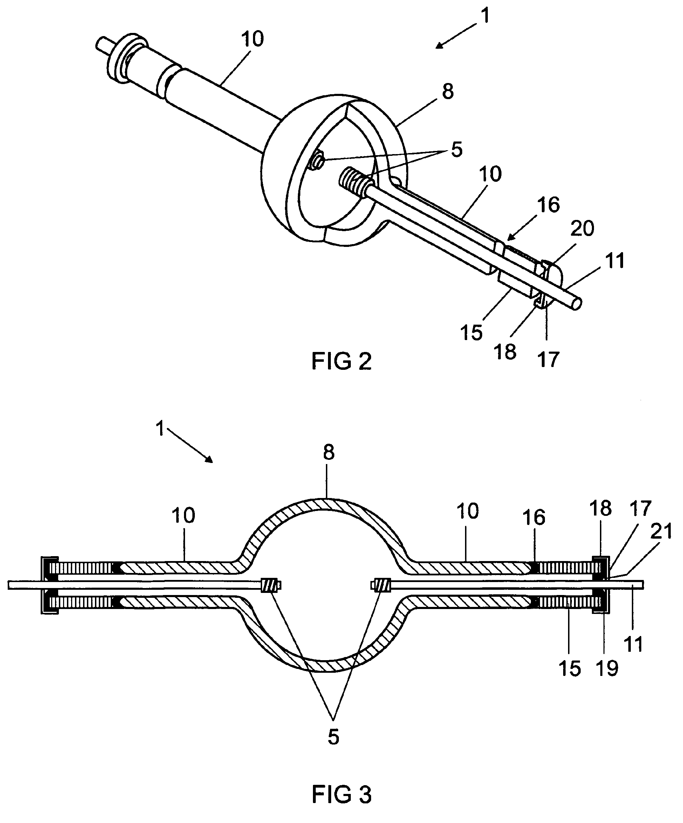

Figur 2 zeigt das Entladungsgefäß 2, das im wesentlichen aus Al₂O₃ hergestellt ist, und das ein bauchiges Zentralteil 8 besitzt, in dem Elektroden und eine Füllung mit Metallhalogeniden untergebracht ist. An das Zentralteil sind Kapillaren 10 integral angesetzt. In diesen sind Durchführungen 11, beispielsweise aus Mo-Stiften oder mehrteilig ausgeführt wie an sich bekannt, geführt, an denen der Schaft der Elektrode jeweils verschweißt ist. Wesentlich ist aber nur, dass das hintere Ende der Durchführung ein Mo-Stift ist. Er hat einen Durchmesser von typisch 1 mm. An die Kapillare 10 schließt sich ein Cermetrohr 15 aus typisch 50 Lagen Folien an. Die Folien sind jeweils typisch 50 µm dick, mit der möglichen Ausnahme der ersten und letzten Folie, die jeweils bis zu 200 bis 300 µm dick sein können. Zwischen Kapillare und Cermetrohr ist ein Hochtemperaturlot 16 eingebracht. An das äußere Ende des Cermetrohrs 15 ist eine Abdeckkappe 17 aus Molybdän mit abgewinkeltem Rand 18 angesetzt, wobei zwischen Cermetrohr und Abdeckkappe ein Platinlot 19 zur Abdichtung eingebracht ist. Die Abdeckkappe 17 ist ein Mo-Blech mit einer Dicke von typisch 200 bis 500 µm.

Die Abdeckkappe 17 ist mit der Durchführung 11, die durch eine zentrale Bohrung 20 der Abdeckkappe hindurchgeführt ist, verschweißt. Bevorzugt ist zur besseren Schweißbarkeit der Durchführung 11 die Abdeckkappe am inneren Loch 21 nach außen aufgewölbt.

Typisch verbleibt zwischen Mo-Durchführung 11 und Kapillare 10 ein Spalt von 50 bis 100 µm Breite. Ähnliches gilt für den Spalt zwischen Cermetrohr 15 und Mo-Durchführung 11.

Typische Füllungen für derartige Lampen sind beispielsweise in EP-A 587 238 beschrieben.

Der Anteil des Mo in der ersten, der Kapillare zugewandten Schicht beträgt 3 bis 15 Vol. -% und in der letzten Schicht 85 bis 97 Vol. -%, der Rest ist Al₂O₃. Dazwischen liegen beispielsweise 30 bis 100 Schichten von jeweils etwa 50 µm Dicke. Der Anteil des Mo nimmt dabei, bevorzugt in konstantem Verhältnis, von der ersten zur letzten Schicht zu. Als Schlüssel zur sicheren Abdichtung hat sich erwiesen, dass die Änderungen im thermischen Ausdehnungskoeffizienten von Folie zu Folie im Cermetrohr und an dessen beiden Enden sehr klein gehalten werden können. Sie liegen mit dieser Technologie im Bereich von einigen 10⁻⁸ K⁻¹.

In einer besonders bevorzugten Ausführungsform sind die radialen schichten so zusammengestellt, dass nicht nur der thermischen Ausdehnungskoeffizient gut abgestuft und angepasst ist, sondern dass auch das Schwindungsverhalten der verschiedenen Schichten nahezu gleich ist. Als Schlüssel zum Erfüllen dieser Anforderung hat sich die Korngröße der verwendeten Pulver erwiesen.

Für die erfolgreiche Abdichtung müssen die unterschiedlichen thermischen Ausdehnungskoeffizienten der Einzelkomponenten A1203 als Material der Kapillare, mit dem thermischen Ausdehnungskoeffizienten 8,3x10⁻⁶ K⁻¹, und Mo-Stift, mit dem thermischen Ausdehnungskoeffizienten von 5x10⁻⁶ K⁻¹, erfolgreich aneinander angepasst werden. Dies geschieht über das axiale Cermet-Bauteil. Dabei wird auf die Stirnfläche der Kapillare aus A1203 ein Cermet-Rohr aus Mo/Al2O3-Schichten aufgebracht. Die erste Schicht ist möglichst A1203-reich um den Übergang zur Kapillare abzusichern. Nach außen nimmt der Anteil Mo immer weiter zu. An der Mo-reichen letzten äußeren Schicht wird bevorzugt eine Mo-Kappe angelötet. Die Vorteile dieser Anordnung sind:
- die Schlickerzusammensetzung zur Herstellung der dünnen Schichten, die man als Folien bezeichnen kann, kann im beliebigen Verhältnis M/A1203 erfolgen. Feinste Abstufungen sind möglich, was den thermischen Ausdehnungskoeffizienten betrifft.
- -bei der Folienherstellung sind Tapes mit einer Dicke zwischen 20 und 100 µm möglich. Die Tape-Stärke der Einzelfolien bestimmt den Grad der Abstufung im thermischen Ausdehnungskoeffizienten im Cermet.
- Die Herstellung der Einzelkomponenten des Verschlusses kann getrennt erfolgen. Es ist also ein modularer Aufbau möglich.
- -durch die Sinterung wird ein gasdichter Cermet-Körper mit gradierter Zusammensetzung erzeugt. Dabei erfolgt eine innige Bindung zwischen den verschiedenen Materialzonen, den Tapes. Risse infolge von thermomechanischen Spannungen lassen sich dadurch vermeiden.
- Durch die Verwendung von gradierten Cermetstrukturen auf den Enden der Kapillaren ist es möglich, die Kapillaren zu verkürzen. Dies führt zu kompakteren Entladungsgefäßen und damit auch Lampen mit effizienterer Lichtausbeute, weil somit auch höhere Temperaturen im Lampenbetrieb erreicht werden.

Die Herstellung des gradierten Cermet erfolgt über eine Multilagentechnologie. Dafür werden dünne Folien mit unterschiedlichem Mo/A1203-Verhältnis hergestellt and anschließend entsprechend dem zunehmendem Mo-Gehalt gestapelt und laminiert. Da die Ausgangsstoffe Mo und A1203 unterschiedliche Sintertemperaturen und somit auch unterschiedliche Schwindungseigenschaften zeigen, würde ein gradierter Multilayerstack sich beim Sintern verziehen und den planaren Stack schließlich verwölben. Das führt letztlich zur Delamination einzelner Schichtverbunde. Der Witz ist nun , eine Anordnung zu finden, die eine möglichst gleichmäßige Sinterschwindung zeigt. Das führt dann zu einer homogenen Sinterschwindung über den Querschnitt des gradierten Cermets und vermeidet Verwölbung und Delamination. Außerdem führt dies zu einer Reduktion der intrinsischen Spannungen im gesinterten Stack.

Um dies zu erreichen, wurde auf Materialien mit unterschiedlichen Korngrößen zurückgegriffen und diese wurden unterschiedlich gemischt. Erst dadurch war es möglich, die Zielschwindung der einzelnen Schichten einzustellen und somit die Schwindung des gesamten gradierten Cermets zu steuern. Dabei liefert ein Cermet gemäß Tab. 1 gradierte Cermets mit 18 +- 0,5% Flächenschwindung und Tab. 2 gradierte Cermets mit 20 +- 0,5% Flächenschwindung. Diese Aussage bezieht sich konkret auf eine Sintertemperatur von 1900 °C, über eine Stunde in N2-Atmosphäre. Die so hergestellten Cermets behalten auch nach dem Sintern ihre planare Struktur und sind dicht. Die verwendeten Pulver sind in Tab. 3 dargestellt. Dabei sind Mo-reiche Cermet-Folien im allgemeinen sinteraktiver und müssen daher mit höherem Anteil an feinerem Pulver realisiert werden. Mo-arme Cermet-Folien sollten mit höheren Anteilen an gröberem Pulver realisiert werden.

Tab 1 und 2 zeigen in der ersten Spalte die Schichtnummer sowie den Volumenanteil Mo-Al2O3 (Alox). Die zweite spalte zeigt den Aufbau aus einer Mo-Fraktion und mehreren Al2O3-Fraktionen mit unterschiedlichem mittleren Korn-durchmesser d50. Die nächsten Spalten geben die Anteile der Fraktionen in Gramm an. Am Ende ist eine Spalte mit der Flächenschwindung S(x,y) in Prozent angegeben.

Tab. 3 erläutert die verschiedenen Fraktionen im Detail. Dabei ist erstaunlich, dass es gelingt, bei geeigneter Wahl des mittleren Durchmessers des Mo-Pulvers nur eine Mo-Fraktion zu verwenden, und dass dann die gewünschten Eigenschaften mit nur höchstens zwei Fraktionen an A1203 erzielt werden können. Dabei ist die Auswahl der möglichen Flächenschwindung ein wesentlicher Erfolgsgarant.

Es zeigt sich, dass als Mo-Fraktion ein Pulver mit einem d50 von 1,5 bis 2,6 µm gewählt werden sollte. Größere Werte von d50 führen nicht zum Ziel. Auch kleinere Werte sind ungeeignet.

Weiter zeigt sich, dass als Al2O3-Fraktion eine Auswahl von Pulvern mit verschiedenem d50-Wert in Betracht gezogen werden muss, um gleichzeitig die strengen Anforderungen an einen angepassten thermischen Ausdehnungskoeffizienten und eine homogene Flächenschwindung zu erfüllen. Dabei wird ein Satz von vier verschiedenen Pulvern verwendet, deren mittlerer Korn-Durchmesser d50 sich von etwa 0,01 bis mehr als 1,0 µm erstreckt, also über zwei Zehnerpotenzen. Die angegebenen Pulver sind von kommerziellen Anbietern erhältlich, beispielsweise von Degussa.

Die dargestellten Ausführungsbeispiele mit 9 Schichten lassen sich leicht in Ausführungsbeispiele mit mehr Schichten überführen, indem beispielsweise die jeweils angegebenen Zusammensetzungen zusätzlich noch geeignet interpoliert werden.

**Tab. 1**

| Schicht Mo-Alox | Aufbau | Einwaage Mo (g) | Einwaage Ax6 (g) | Einwaage Ax12 (g) | S(x,y) |
|---|---|---|---|---|---|
| 1/5-95 | Mo, Ax6, Ax12 | 5,1 | 16,8 | 18,9 | 18,5 |
| 2/10-90 | Mo, Ax6, Ax12 | 10,2 | 17,4 | 20,4 | 17,8 |
| 3/20-80 | Mo, Ax6, Ax12 | 20,4 | 14,9 | 16,8 | 17,7 |
| 4/40-60 | Mo, Ax6, Ax12 | 40,9 | 19,3 | 4,5 | 18,1 |
| 5/50-50 | Mo, Ax6, Ax12 | 51,1 | 16,1 | 3,8 | 17,7 |
| 6/60-40 | Mo, Ax6, Ax12 | 61,3 | 12,9 | 3,0 | 17,8 |
| 7/80-20 | Mo, Ax6, Ax12 | 81,8 | 6,4 | 1,5 | 18,0 |
| 8/90-10 | Mo, Ax6, Ax12 | 92,0 | 3,2 | 0,8 | 18,1 |
| 9/95-5 | Mo, Ax6 | 97,1 | 1,5 | | 18,0 |

**Tab. 2**

| Schicht/ Mo-Alox | Aufbau | Einwaage Mo (g) | Einwaage Ax-1(g) | Einwaage Ax-2 (g) | S(x,y) |
|---|---|---|---|---|---|
| 1/5-95 | Mo, Ax6, Ax12 | 5,1 | 28,6 | 9,1 | 20,0 |
| 2/10-90 | Mo, Ax15 Ax12 | 10,2 | 18,7 | 17,1 | 20,0 |
| 3/20-80 | Mo, Ax15 Ax12 | 20,4 | 19,5 | 12,3 | 20,4 |
| 4/40-60 | Mo, Ax6, | 40,9 | 23,8 | | 20,1 |
| 5/50-50 | Mo, Ax15 | 51,1 | 19,6 | | 20,2 |
| 6/60-40 | Mo, Ax15 Ax20 | 61,3 | 11,9 | 4,0 | 19,7 |
| 7/80-20 | Mo, Ax15 Ax20 | 81,8 | 4,0 | 4,0 | 20,1 |
| 8/90-10 | Mo, Ax6, | 92,0 | 4,0 | | 20,1 |
| 9/95-5 | Mo, Ax6 | 97,1 | 2,0 | | 19,9 |

**Tab. 3**

| Material | Typ | Korngröße d50 in µm |
|---|---|---|
| Mo | Mo | 1,5 bis 2,6 |
| A1203 | Ax 20 | 0,01 bis 0,02 |
| A1203 | Ax 15 | 0,3 bis 0,4 |
| A1203 | Ax 6 | 0,5 bis 0,6 |
| A1203 | Ax 12 | 1,0 bis 1,5 |

## Patentansprüche

1. Verfahren zur Herstellung eines rohrförmigen Cermetteils das aus axial hintereinander geschichteten einzelnen Schichten unterschiedlicher Zusammensetzung besteht, wobei jede Schicht Mo und Al₂O₃ enthält, wobei der Anteil des Mo in der ersten Schicht 3 bis 15 Vol. -% beträgt und in der letzten Schicht 85 bis 97 Vol . -% beträgt, und wobei auf dem Ende des Cermetteils eine Abdeckkappe aus Molybdän sitzt, die insbesondere eine Bohrung für eine Durchführung aufweist, wobei die Abdeckkappe mit der Durchführung verschweißt ist, und wobei die Abdeckkappe mit dem Cermetteil mittels metallhaltigem Lot verbunden ist, **gekennzeichnet durch** folgende Verfahrensschritte:
a) Herstellen von Folien, insbesondere mit einer Schichtdicke von 20 bis 100 µm, gebildet jeweils aus einem Cermet der Komponenten Mo und Al₂O₃, so dass der Volumenanteil des Mo zwischen 3 und 97% liegt;
b) Stapeln und Laminieren eines Bündels von mindestens 5 Folien, deren Mo-Gehalt von einer zur anderen Folie zunimmt, wobei eine erste Folie 3 bis 15 Vol. -% Mo-Anteil und eine letzte Folie 85 bis 97% Mo-Anteil besitzt, wobei die Schichtdicke der Folien, abgesehen von der ersten und letzten Folie, zwischen 20 und 100 µm beträgt, so dass ein Laminat gebildet wird;
c) Ausstanzen von rohrförmigen Teilen aus dem Laminat, die somit entlang ihrer Längsachse einen graduell unterschiedlichen Gehalt an Mo besitzen.

2. Verfahren nach Anspruch 1, **dadurch gekennzeichnet, dass** die Auswahl der Komponenten Mo und Al2O3 so erfolgt, dass das Schwindungsverhalten der einzelnen Folien sich maximal um einen Wert von 1% voneinander unterscheidet.

3. Verfahren nach Anspruch 1, **dadurch gekennzeichnet, dass** für die Komponente Mo ein Pulver einer einheitlichen Fraktion mit einem mittleren Korn-Durchmesser d50 von 1,5 bis 2,6 µm verwendet wird.

4. Verfahren nach Anspruch 1, **dadurch gekennzeichnet, dass** für die Komponente Al2O3 ein Pulver verwendet wird, das aus bis zu vier verschiedenen Pulver-Fraktionen zusammengemischt wird, wobei die verschiedenen Fraktionen verschiedene mittlere Korn-Durchmesser d50 aufweisen, die zwischen 0,01 µm und 1,5 µm liegen.

5. Hochdruckentladungslampe mit einem keramischen Entladungsgefäß (2) und einer Längsachse, wobei Elektroden (5) jeweils mittels einer Durchführung (7) aus dem Entladungsgefäß über Kapillaren (10) herausgeführt sind, wobei an die Kapillare (10) ein rohrförmiges Cermetteil (15) hergestellt durch das Verfahren von Anspruch 1 angesetzt ist, das aus axial hintereinander geschichteten einzelnen Schichten unterschiedlicher Zusammensetzung besteht, wobei jede Schicht Mo und Al₂O₃ enthält, wobei der Anteil des Mo in der ersten, der Kapillare zugewandten Schicht 3 bis 15 Vol. -% beträgt und in der letzten Schicht 85 bis 97 Vol. -% beträgt, und wobei auf dem Ende des Cermetteils (15) eine Abdeckkappe (17) aus Molybdän sitzt, die insbesondere eine Bohrung (20) für die Durchführung aufweist, wobei die Abdeckkappe mit der Durchführung verschweißt ist, und wobei die Abdeckkappe mit dem Cermetteil mittels metallhaltigem Lot verbunden ist, und wobei die Verbindung zwischen Kapillare und Cermetteil mittels hochschmelzenden Glaslot oder sinteraktivem Al₂O₃-Pulver erfolgt, **dadurch gekennzeichnet, dass die äußere stirnseite der Kapillare an ihrem inneren und/oder äußeren Rand abgeschrägt ist und dass die der Kapillare zugewandte Stirnseite des Cermetteils daran angepasst ist.**

6. Hochdruckentladungslampe nach Anspruch 5, **dadurch gekennzeichnet, dass** das Cermetteil aus mindestens 5, bevorzugt mindestens 8, besonders bevorzugt aus mindestens 30 verschiedenen Schichten besteht, deren Anteil an Mo von innen nach außen zunimmt.

7. Hochdruckentladungslampe nach Anspruch 5, **dadurch gekennzeichnet, dass** die einzelnen Schichten des Cermetteils, abgesehen von der ersten und letzen Schicht, jeweils 20 bis 100 um dick sind.

8. Hochdruckentladungslampe nach Anspruch 7, **dadurch gekennzeichnet, dass** die Schichtdicke dieser Schichten jeweils im wesentlichen gleich ist.

## Claims

1. Method for producing a tubular cermet part which consists of individual layers of different composition layered axially in succession, each layer containing Mo and Al₂O₃, the proportion of Mo in the first layer being from 3 to 15 vol.% and in the last layer being from 85 to 97 vol.%, and a molybdenum cover cap which comprises in particular a bore for a feed-through being placed on the end of the cermet part, the cover cap being welded to the feed-through and the cover cap being connected to the cermet part by means of solder containing metal, **characterized by** the following method steps:
a) producing films, in particular with a layer thickness of from 20 to 100 µm, respectively formed by a cermet having the components Mo and Al₂O₃, so that the volume fraction of Mo is between 3 and 97%;
b) stacking and laminating a bundle of at least 5 films, the Mo content of which increases from one film to another, a first film having an Mo content of from 3 to 15 vol.% and a last film having an Mo content of from 85 to 97 vol.%, the layer thickness of the films, apart from the first and last films, each being from 20 to 100 µm, so that a laminate is formed;
c) stamping tubular parts from the laminate, which thus have a gradually differing Mo content along their longitudinal axis.

2. Method according to Claim 1, **characterized in that** the components Mo and Al₂O₃ are selected so that the shrinkage behaviors of the individual films differ from one another at most by a value of 1%.

3. Method according to Claim 1, **characterized in that** a powder of a uniform fraction having an average grain diameter d50 of from 1.5 to 2.6 µm is used for the component Mo.

4. Method according to Claim 1, **characterized in that** a powder which is mixed together from up to four different powder fractions is used for the component Al₂O₃, the different fractions having different average grain diameters d50 which lie between 0.01 µm and 1.5 µm.

5. High-pressure discharge lamp having a ceramic discharge vessel (2) and a longitudinal axis, with electrodes (5) respectively being led out from the discharge vessel by means of a feed-through (7) via capillaries (10), a tubular cermet part (15), produced by the method of Claim 1, which consists of individual layers of different composition layered axially in succession, being fitted on the capillary (10), each layer containing Mo and Al₂O₃, the proportion of Mo in the first layer being from 3 to 15 vol.% and in the last layer being from 85 to 97 vol.%, and a molybdenum cover cap (17) which comprises in particular a bore (20) for the feed-through being placed on the end of the cermet part (15), the cover cap being welded to the feed-through and the cover cap being connected to the cermet part by means of solder containing metal, and the connection between the capillary and the cermet part being established by means of high-melting glass solder or sinter-active Al₂O₃ powder, **characterized in that** the outer end side of the capillary is chamfered on its inner and/or outer edge, and **in that** the cermet part's end side facing toward the capillary is matched thereto.

6. High-pressure discharge lamp according to Claim 5, **characterized in that** the cermet part consists of at least 5, preferably at least 8, particularly preferably of at least 30 different layers, the Mo content of which increases from the inside outward.

7. High-pressure discharge lamp according to Claim 5, **characterized in that** the individual layers of the cermet part, apart from the first and last layers, are each from 20 to 100 µm thick.

8. High-pressure discharge lamp according to Claim 7, **characterized in that** the layer thicknesses of these layers are each essentially equal.

## Revendications

1. Procédé de production d'une partie tubulaire de cermet, qui est constituée de diverses couches de compositions différentes mises en couche les unes derrière les autres axialement, chaque couche contenant du Mo et de l'Al₂O₃, la proportion du Mo dans la première couche représentant de 3 à 15 % en volume et dans la dernière couche de 85 à 97 % en volume, et dans lequel l'extrémité de la partie en cermet est coiffée d'un capuchon en molybdène, qui a notamment un trou pour une traversée, le capuchon étant soudé à la traversée, et dans lequel le capuchon est relié à la partie de cermet au moyen d'une brasure contenant du métal, **caractérisé par** les stades de procédé suivants :
a) on produit des feuilles ayant notamment une épaisseur de couches de 20 à 100 µm formées respectivement d'un cermet des constituants Mo et Al₂O₃ de manière à ce que la proportion en volume du Mo soit comprise entre 3 et 97 % ;
b) on empile et on lamine un faisceau d'au moins cinq feuilles dont la teneur en Mo augmente d'une feuille à l'autre, une première feuille ayant une proportion en Mo de 3 à 15 % en volume et une dernière feuille ayant une proportion en Mo de 85 à 97 %, l'épaisseur de couche des feuilles, abstraction faite de la première et de la dernière feuilles, étant comprise entre 20 et 100 µm, de manière à former un stratifié ;
c) on découpe des parties tubulaires dans le stratifié, qui ont ainsi le long de leur axe longitudinal une teneur en Mo différente graduellement.

2. Procédé suivant la revendication 1, **caractérisé en ce que** l'on effectue le choix des constituants Mo et Al₂O₃ de manière à ce que les comportements de retrait des diverses feuilles se distinguent les uns des autres au maximum d'une valeur de 1 %.

3. Procédé suivant la revendication 1, **caractérisé en ce que** l'on utilise pour les constituants Mo une poudre d'une fraction unitaire ayant une granulométrie moyenne d50 de 1,5 à 2,6 µm.

4. Procédé suivant la revendication 1, **caractérisé en ce que** l'on utilise pour les constituants Al₂O₃ une poudre qui est constituée d'un mélange de jusqu'à quatre fractions de poudre différentes, les fractions différentes ayant des granulométries moyennes d50 différentes, qui sont comprises entre 0,01 µm et 1,5 µm.

5. Lampe à décharge à haute pression, comprenant une enceinte ( 2 ) de décharge en céramique et un axe longitudinal, des électrodes ( 5 ) sortant respectivement au moyen d'une traversée ( 7 ) de l'enceinte de décharge par des capillaires ( 10 ), dans laquelle sur les capillaires ( 10 ) est mise une partie ( 15 ) tubulaire de cermet produite par le procédé de la revendication 1, qui est constituée de diverses couches de compositions différentes mises en couches les unes derrière les autres axialement, chaque couche comprenant du Mo et de l' Al₂O₃, la proportion du Mo dans la première couche tournée vers les capillaires représentant de 3 à 15 % en volume et dans la dernière couche de 85 à 97 % en volume, et dans laquelle un capuchon ( 17 ) en molybdène coiffe la partie ( 15 ) en cermet, capuchon qui a notamment un trou ( 20 ) pour la traversée, le capuchon étant soudé à la traversée, et dans laquelle le capuchon est relié à la partie en cermet au moyen d'une brasure contenant du métal, et dans laquelle la liaison entre les capillaires et la partie en cermet s'effectue à l'aide d'une brasure pour du verre à haut point de fusion ou d'une poudre en Al₂O₃ active au frittage, **caractérisée en ce que** le côté frontal extérieur des capillaires est biseauté sur son bord intérieur et/ou son bord extérieur et **en ce que** le côté frontal tourné vers le capillaire de la partie de cermet y est adapté.

6. Lampe à décharge à haute pression suivant la revendication 5, **caractérisée en ce que** la partie de cermet est constituée d'au moins 5, de préférence d'au moins 8, et d'une manière particulièrement préférée d'au moins 30 couches différentes, dont la proportion en Mo croît de l'intérieur vers l'extérieur.

7. Lampe à décharge à haute pression suivant la revendication 5, **caractérisée en ce que** les diverses couches de la partie de cermet, abstraction faite de la première et de la dernière couches, ont respectivement une épaisseur de 20 à 100 µm.

8. Lampe à décharge à haute pression suivant la revendication 7, **caractérisée en ce que** l'épaisseur de ces couches est sensiblement la même.
